# EUROPEAN PATENT APPLICATION

(11) **EP 4 429 186 A1**
(43) Date of publication of application: **11.09.2024**
(21) Application number: 24161970.9
(22) Date of filing: 07.03.2024
(51) Int. Cl.: H04L 45/00, H04W 40/24, H04W 40/28, H04W 84/18

(54) **A SOURCE ROUTING INFORMATION DISSEMINATION SOLUTION FOR WIRELESS MESH NETWORKS**

(30) Priority: 09.03.2023 FI 20235271
(71) Applicant: Wirepas Oy, 33720 Tampere (FI)
(72) Inventor: Pirskanen, Juho, Kangasala (FI); Salokannel, Juha, Tampere (FI)
(74) Representative: Berggren Oy

(57) **Abstract**

The invention relates to a dissemination system (200). The system (200) comprises: a first communication device (202), and one or more second communication devices (204a-204n) being associated members of the first communication device (202). The first communication device (202) is configured to communicate source routing information to at least one second communication device (204a-204n). The source routing information comprises source routing control information and a source routing identifier. In response to receiving the source routing information, each second communication device (204a-204n) being a router device (104b) is configured to: decide based on the source routing control information whether to repeat the received source routing information to its member devices (206a-206n) with the identifier of said second communication device (204a-204n) set to the source routing identifier or with the source routing identifier of the received source routing information. The invention relates also to dissemination methods, wireless communication devices, a computer program, and a computer readable medium for a wireless mesh network (102).

## Description

### TECHNICAL FIELD

The invention concerns in general the technical field of wireless mesh networks. Especially the invention concerns source routing information dissemination in the wireless mesh networks.

### BACKGROUND

In a wireless mesh network, different downlink routing (i.e. traffic from external backend systems to a target device belonging to the wireless mesh network) solutions may be divided into the following different high-level categories: downlink flooding, routing table, and source routing.

In the downlink flooding solution, a downlink data packet is flooded in downlink direction to all possible parts of the wireless mesh network to reach the target device of the data packet. Each router device of the wireless mesh network may potentially limit the flooding to its member devices which are not having any child devices and are not targets of the packet. For example, this is the current downlink routing solution in Digital European Cordless Telecommunications (DECT-2020 NR) Release 1. The benefit of the downlink flooding solution is that the solution is simple and reliable and changes in network topologies do not impact the routing, therefore, no routing tables or complex routing logic are needed, nor signalling to update any routing information is needed. The drawback of the downlink flooding solution is a high overhead due to the flooding as each downlink data packet is potentially transmitted over multiple, even most of radio links of the network unnecessarily.

In the routing table solution, each router device of the wireless mesh network maintains a routing table that comprises the addresses of the devices below the router device and the corresponding next hop addresses of the devices. There exist different methods for obtaining entries to the routing table and maintaining the routing tables. For example, the devices may send explicit packets to update the routing tables, or the router devices may implicitly learn from uplink data traffic. The routing tables may be complete and always updated. Alternatively, the routing tables may be partial. In case of the partial routing tables, the router device falls back to downlink flooding in case no target next hop address is not found in the routing table for the packet to be forwarded. The benefits of the routing table solution are that the flooding may be efficiently restricted in a single router device individually, because each router device may independently decide to fall back to the flooding, when the updated information is not available in the routing table. The routing tables may implicitly be updated from every uplink packet but there is no necessity to update the routing tables continuously when there is no data packet activity. Therefore, the routing table routing solution works efficiently when there is a bi-directional traffic between a single device of the wireless mesh network and the backend system. Further, the benefit of the routing table routing solution is that the packet overhead is not increased.

One drawback of the routing table solution is the memory consumption of the router devices, as each router device needs to maintain for each target address a next hop address. The memory consumption increases in the routing table solution in router devices located closer to a gateway device more than in router devices located further in the network topology, as a higher number of target devices are below these router devices closer to the gateway device. The gateway device is transmitting the data received from the backend system to the wireless mesh network. Also, if partial routing tables are used the likelihood that the table space is more probable to run out in the router devices closer to the gateway in the network topology, where actually selecting the correct next hop and avoiding flooding would provide the majority of the overhead benefits of avoiding flooding.

In the source routing solution, each source device stores the full path to the target device and appends a protocol header of a transmitted packet, i.e. protocol data unit (PDU), with all next hop addresses so that the full path from the source device to the target device is included in the transmitted packet. In the downlink direction, this means that the source device, e.g. a sink device or a gateway device, of the downlink data packet towards the wireless mesh network maintains a list of next-hop addresses to each device under it and includes these addresses into every sent downlink PDU. The benefit of the source routing solution compared to the routing tables solution is that the router devices do not need to have any extra memory for routing, as the protocol header of the received PDU comprises the next hop address of the PDU where the router device shall forward the received PDU. As the PDU comprises the full path there is no necessity to flood the data in the wireless mesh network and the overhead of the flooding routing solution is avoided.

The drawback of the source routing solution is the overhead introduced into each transmitted packet which increases when the number of hops is increased. Secondly, any change of the route needs to be informed to the source device and maintained even though there are no packets to be delivered. Therefore, the higher number of devices and hops there are in the wireless mesh network, the higher number of route update messages and more packet overhead are introduced reducing the benefits of avoiding the flooding. Additionally, in the source routing solution, the signalling load of the route update messages concentrates to the gateway devices of the wireless mesh network and to the devices connected to the gateway devices, as all route update messages go via those router devices even though route changes are not impacting at all how the downlink PDUs are routed from those router devices, i.e. the route changes are happening in lower parts of the network topology.

Further, the source routing solution may easily lead to a very high route update load, for example in scenarios such as when high number of devices starts to malfunction, which causes resets, or when the number of moving devices or changes in channel conditions are increased.

Each different downlink routing solutions discussed above has its own limitations and benefits. Therefore, there exists a need to develop further routing solutions for wireless mesh networks.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An objective of the invention is to present a dissemination system, dissemination methods, wireless communication devices, a computer program, and a computer readable medium for a wireless mesh network. Another objective of the invention is that the dissemination system, the dissemination methods, the wireless communication devices, the computer program, and the computer readable medium for a wireless mesh network enables dissemination of source routing information in order to reduce the number of registrations.

The objectives of the invention are reached by a dissemination system, dissemination methods, wireless communication devices, a computer program, and a computer readable medium as defined by the respective independent claims.

According to a first aspect, a dissemination system for a wireless mesh network comprising a plurality of communication devices is provided, wherein the system comprises: a first communication device, and one or more second communication devices being associated members of the first communication device, wherein the first communication device and the one or more second communication devices belong to the plurality of communication devices of the wireless mesh network; wherein the first communication device is configured to communicate source routing information to at least one second communication device of the one or more second communication devices for disseminating at least one functionality of a hop-limited downlink source routing, wherein the source routing information comprises source routing control information and a source routing identifier indicating latest hop router device participating in the hop-limited downlink source routing; and wherein in response to receiving the source routing information from the first communication device, each second communication device being a router device is configured to decide based on the source routing control information whether to repeat the received source routing information to its member devices with the identifier of said second communication device set to the source routing identifier or with the source routing identifier of the received source routing information

The first communication device may be a sink device configured to communicate the source routing information by: broadcasting a beacon message comprising the source routing information to all second communication devices, or unicasting a control message comprising the source routing information to at least one second communication device of the one or more second communication devices.

Alternatively, the first communication device may be a router device configured to communicate the source routing information to the at least one second communication device by broadcasting a beacon message comprising the source routing information or by unicasting a control message comprising the source routing information.

The source routing control information may comprise a source routing hop-limit value representing the number hops the hop-limited downlink source routing covers and a hop-count value, and wherein in response to receiving the source routing information from the first communication device, each second communication device being a router device may be configured to: compare the hop-count value of the received source routing information to the source routing hop-limit value of the received source routing information; and communicate the received source routing information to its member devices with the hop-count value increased by one and the identifier of said second communication device set to the source routing identifier, if the hop-count value does not meet the source routing hop-limit value; or communicate the received source routing information comprising at least the source routing identifier of the received source routing information to its member devices, if the hop-count value meets the source routing hop-limit value.

Alternatively, the source routing control information of the source routing information may comprise a source routing hop-limit value representing the number hops the hop-limited downlink source routing covers, and wherein in response to receiving the source routing information from the first communication device, each second communication device being a router device may be configured to: communicate the received source routing information to its member devices with the source routing hop-limit value decreased by one and the identifier of said second communication device set to the source routing identifier, if the source routing hop-limit value of the received source routing information is higher than zero; or otherwise communicate the source routing information comprising at least the source routing identifier of the received source routing information to its member devices.

When each second communication device changing its association from the first communication device to a third communication device belonging to the plurality of communication devices of the wireless mesh network, said second communication device may be configured to: compare the source routing identifier comprised in the source routing information received from the third communication device to the source routing identifier comprised in the source routing information received from the first communication device; and send a registration message to the third communication device for routing the registration message to a sink device, if the source routing identifier comprised in the source information received from the first communication device differs from the source routing identifier comprised in the source routing information of the third communication device; or define that the existing registration is valid, if the source routing identifier comprised in the source information received from the first communication device corresponds to the source routing identifier comprised in the source routing information of the third communication device.

The source routing information may further comprise validity time data, and wherein each second communication device may be configured to send a registration message to the first communication device for routing the registration message to a sink device according to the validity time data.

In response to receiving a downlink data packet comprising source routing path data and an identifier of a destination device of the downlink data packet from the first communication device, each second communication device may be configured to: if the source routing path data comprises an identifier of a member device of the second communication device, unicast the downlink data packet to said member device; or if the identifier of the destination device corresponds to an identifier of a member device of the second communication device, unicast the downlink data packet to said member device; or otherwise send the downlink data packet to all of its router member devices for routing the downlink data packet to the destination device.

The first communication device may be configured to communicate the source routing information periodically.

According to a second aspect, a dissemination method for a wireless mesh network is provided, wherein the method comprises following steps: communicating, by a first communication device, source routing information to at least one second communication device being an associated member of the first communication device for disseminating at least one functionality of a hop-limited downlink source routing, wherein the source routing information comprises source routing control information and a source routing identifier indicating latest hop router device participating in the hop-limited downlink source routing; in response to receiving the source routing information from the first communication device, deciding, by each second communication device, based on the source routing control information whether to repeat the received source routing information to its member devices with the identifier of said second communication device set to the source routing identifier or with the source routing identifier of the received source routing information.

According to a third aspect, a communication device for a wireless mesh network is provided, wherein the communication device comprises: a controller, and a radio communicator for operating as a radio node device, wherein the communication device is configured to: communicate, by the radio communicator, source routing information to at least one second communication device being an associated member of the communication device for disseminating at least one functionality of a hop-limited downlink source routing, wherein the source routing information comprises source routing control information and a source routing identifier indicating latest hop communication device participating in the hop-limited downlink source routing.

According to fourth aspect, a dissemination method for the communication device described above is provided, wherein the method comprises at least a step of: communicating, by a radio communicator of the communication device, source routing information to at least one second communication device being an associated member of the communication device for disseminating at least one functionality of a hop-limited downlink source routing, wherein the source routing information comprises source routing control information and a source routing identifier indicating latest hop communication device participating in the hop-limited downlink source routing.

According to a firth aspect, a communication device for a wireless mesh network is provided, wherein the communication device comprises: a controller, and a radio communicator for operating as a radio node device, wherein the communication device is configured to: receive, by the radio communicator, source routing information from a first communication device, whose associated member the communication device is, wherein the source routing information comprises source routing control information and a source routing identifier indicating latest hop communication device participating in the hop-limited downlink source routing; in response to receiving the source routing information, decide, by the controller, based on the source routing control information whether to repeat, by the radio communicator, the received source routing information to its member devices with the identifier of said second communication device set to the source routing identifier or with the source routing identifier of the received source routing information.

According to a sixth aspect, a dissemination method for the communication device as described above is provided, wherein the method comprises at least following steps of: receiving, by a radio communicator of the communication device, source routing information from a first communication device, whose associated member the communication device is, wherein the source routing information comprises source routing control information and a source routing identifier indicating latest hop communication device participating in the hop-limited downlink source routing; in response to receiving the source routing information; and deciding, by a controller of the communication device, based on the source routing control information whether to repeat, by the radio communicator of the communication device, the received source routing information to its member devices with the identifier of said second communication device set to the source routing identifier or with the source routing identifier of the received source routing information.

A computer program is provided, wherein the computer program comprises instructions, which, when the computer program is executed by a computer, cause the computer to carry out at least the steps of the method as described above.

A tangible, non-volatile computer readable medium is provided, wherein the computer readable medium comprises the computer program as described above.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically an example of a wireless communication environment in which a dissemination system may operate.
Figures 2A-2C schematically illustrate examples of the dissemination system, which operates in the wireless mesh network.
Figure 3A illustrates schematically an example of a dissemination method for disseminating source routing information in the wireless communication network by the dissemination system.
Figures 3B and 3C illustrate schematically examples of decision-making step of the dissemination method.
Figures 4A-4D illustrate schematically examples of disseminating the source routing information.
Figure 5A illustrates schematically an example of disseminating the source routing information into the wireless mesh network.
Figure 5B illustrates schematically another example of disseminating the source routing information into the wireless mesh network.
Figure 6 illustrates schematically an example of a decision process of communicating a registration message in response to changing association.
Figure 7 illustrates another example of the dissemination system, which operates in the wireless mesh network.
Figure 8 illustrates schematically an example of a routing process of a downlink data packet by the dissemination system using a hop-coverage limited downlink source routing.
Figure 9 illustrates schematically an example of routing a downlink data packet by using the hop-coverage limited downlink source routing.
Figure 10 illustrates schematically an example of operational parts of a wireless radio communication device.

### DESCRIPTION OF THE EXEMPLIFYING EMBODIMENTS

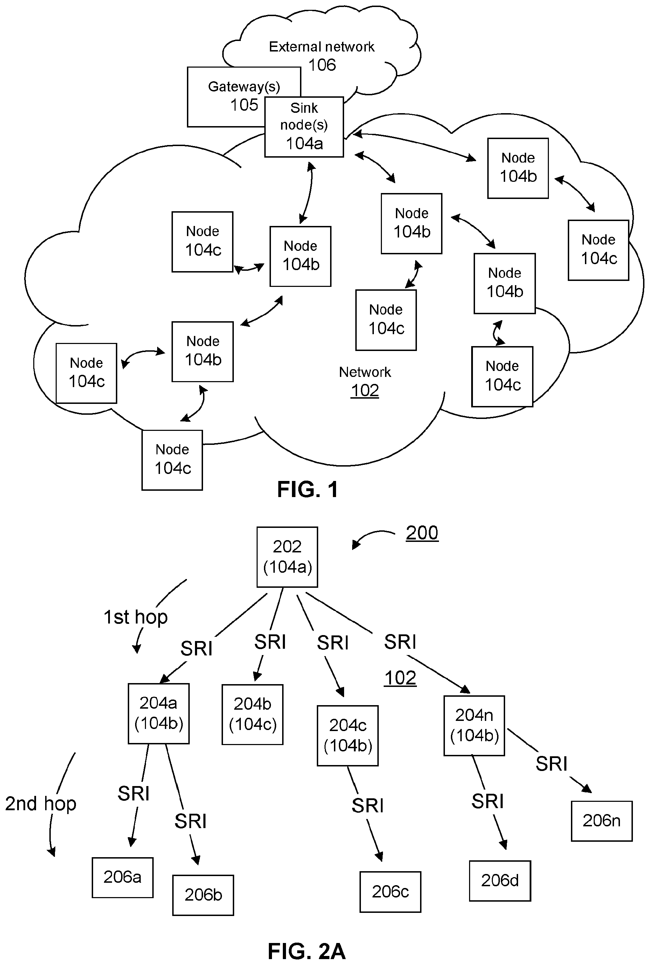

Figure 1 illustrates schematically an example of a wireless communication environment in which a dissemination system 200 may operate. The environment comprises a wireless mesh network (system) 102, which comprises a plurality of wireless radio communication devices (nodes) 104a, 104b, 104c. The devices 104a, 104b, 104c operate on a same spectrum comprising one or more frequency bands at a same geographical area, e.g. within the presented environment. Each of the one or more frequency bands may comprise one or more frequency channels. The use of same spectrum enables a bidirectional radio communication between the devices 104a, 104b, 104c in the network 102, whereupon radio transmissions transmitted by one device 104a, 104b, 104c may be received by another device 104a, 104b, 104c and vice versa.

The dissemination system 200 may be applied to any wireless radio communication network 102 that uses packet transmissions in the communication, i.e. in data exchange. Preferably, the system 200 may be applied to any wireless radio communication network that may be used for multi-hop communication between the devices 104a, 104b, 104c, i.e. the packets may be delivered over at least two consecutive radio links. The system 200 may be applied in wireless communication networks 102 complying Digital European Cordless Telecommunications (DECT-2020 NR) standard. The DECT-2020 NR standard is a radio access technology developed by ETSI. Some non-limiting examples to which the routing system 300 may also be applied may comprise, but is not limited to, a wireless multi-hop network, a wireless mesh network, e.g. wireless sensor network (WSN), a Bluetooth Low Energy (BLE) mesh network, a Zigbee network, a Thread network, a Public Land Mobile Network (PLMN), a Wireless Local Area Network (WLAN), a Low Power Wide Area Network (LPWAN), a cellular based local area network, a cellular network, and/or any other wireless networks. One example of WSN is explained in patent publication US 8064363 B2.

As above has been explained, each device 104a, 104b, 104c is able to provide, by means of its radio communicator 1036, the bi-directional radio communication with at least one other device 104a, 104b, 104c. This means that each device 104a, 104b, 104c may operate as a transmitter, as a receiver, or as a transmitter-receiver when each device 104a, 104b, 104c is able to transmit at least one message to other device(s) 104a, 104b, 104c and to receive at least one message from the other device(s) 104a, 104b, 104c in the network 102.

The network 102 may also comprise at least one gateway device 105, e.g. one, two, three, four, or more gateway devices. Each gateway device 105 operates as a gateway between the network 102 and other external network(s) 106, e.g. Internet, and delivers data into the network 102 and from the network 102. Each gateway device 105 communicates with at least one sink device (node) 104a, e.g. one, two, three, four, or more sink devices, and each sink device 104a operates as a radio interface for the gateway device 105 in the network 102. The at least one sink device 104a belongs to the plurality of devices 104a, 104b, 104c of the network 102. Each sink device 104a may locate physically in connection with the gateway device 105 or separately in a different part of the network 102. If the gateway device 105 comprises several sink devices 104a, one may locate in connection with the gateway device 105 and others separately in different parts of the network 102.

The sink device(s) 104a typically has a specific role to route data packets from the network 102 to the gateway device 104 and/or from the gateway device 104 into the network 102. The sink device role does not need to be fixed, but the sink device 104a may change its role into a router role, e.g. if the connection to the gateway device 105 is lost or if the gateway device 105 is not able to provide the service, e.g. the gateway device 105 has lost its connection to the Internet. The other node devices 104b, 104c are able to operate in different fixed or non-fixed roles in the network 102. The other devices 104b, 104c in the network 102 are router devices (i.e. routers) 104b, i.e. devices operating in a router role, and non-router devices (i.e. non-routers) 104c, i.e. devices operating in a non-router role, depending on whether a device needs to participate in data packet forwarding. One method for selecting router and non-router roles may be e.g. in accordance with the method explained in patent publication US 10,499,264. The sink devices 104a and the router devices 104b of the network 102 may participate in routing operations, i.e. in the routing of the data packets.

Each router device 104b maintains a connectivity of the network 102 and routes (forwards) data (e.g. data packets) of other devices 104a, 104b, 104c when necessary. In other words, each router device 104b participates in routing of data (e.g. data packets in the network 102. Each non-router device 104c is able to provide a bi-directional communication in order to transmit its own data (e.g. data packets) and to receive data (e.g. data packets) directed for it similarly as sink devices 104a and router devices 104b, but the non-router device 104c does not route data (e.g. data packets) of other devices 104a, 104b, 104c. Each device of the network 102 may be able to operate at least as a router 104b or a non-router device 104c. Alternatively, at least part of the devices of the network may be able to operate as a router device 104b or non-router device 104c, and one or more of the devices of the network 102 may be able to operate only as a router device 104b or only as a non-router device 104c.

Further, each device of the network 102 may operate with a limited capacity battery as a router device 104b or a non-router device 104c. To obtain maximum operating time both the router devices 104b and the non-router devices 104c may limit their activity of a radio communicator 1036 by having discontinuous transmission and reception mode when the radio communicator 1036 is switched off. Due to the limited battery capacity of the router devices 104b and the non-router devices 104c, all configuration and registration signalling in the network 102 is preferred to be limited. Alternatively, at least part of the devices of the network 102 may operate with a limited capacity battery as a router device 104b or non-router device 104c, and one or more of the devices of the network 102 may operate with a limited capacity battery only as a router device 104b or only as a non-router device 104c.

The network 102 comprises the devices 104b, 104c so that all devices 104b, 104c are not able or not preferring to communicate directly with the sink device(s) 104a due to radio conditions, e.g. extensive distance between the devices 104a, 104b, 104c, interference or signal fading between the devices 104a, 104b, 104c; or a limited radio range, whereupon it is necessary or preferred by the devices 104a, 104b, 104c to use multi-link (i.e. multi-hop) communication between each device 104b, 104c and the sink device 104a.

Uplink data packets generated by one or more of the plurality of communication devices 104b, 104c are routed in an uplink direction in the wireless mesh network 102, i.e. outwards from wireless communication network 102, e.g. to the one or more external networks 106. Downlink data packets generated for one or more of the plurality of communication devices 104a, 104b, 104c are routed in a downlink direction in the wireless mesh network 102, i.e. into the wireless mesh network 102, e.g. from the one or more external networks 106.

Figures 2A-2C schematically illustrate examples of a dissemination system 200, which operates in the wireless mesh network 102. The dissemination system 200 is used for disseminating, i.e. distributing, source routing information into the wireless communication network 102. The source routing information indicates at least one functionality of a hop-limited downlink source routing. The hop-limited downlink source routing -based routing solution is used to route downlink data (e.g. at least one downlink data packet) from a source device (e.g. a sink device 104a) up to a limited number of (radio) hops and after the limited number of hops the downlink data is routed to a destination device by using at least one other routing solution, e.g. routing table -based routing solution and/or downlink flooding -based routing solution. In the hop-limited downlink source routing -based routing solution, the downlink data packet comprises a destination device identifier (destination device ID) and source routing path data representing a communication path from the source device to the last device participating in the hop-limited downlink source routing. The source routing information is disseminated into the network 102 to inform the communication devices of the network 102 that the hop-limited downlink source routing -based routing solution is in use and the at least one functionality of the hop-limited downlink source routing -based routing solution. The hop-limited downlink source routing is discussed more later in this application.

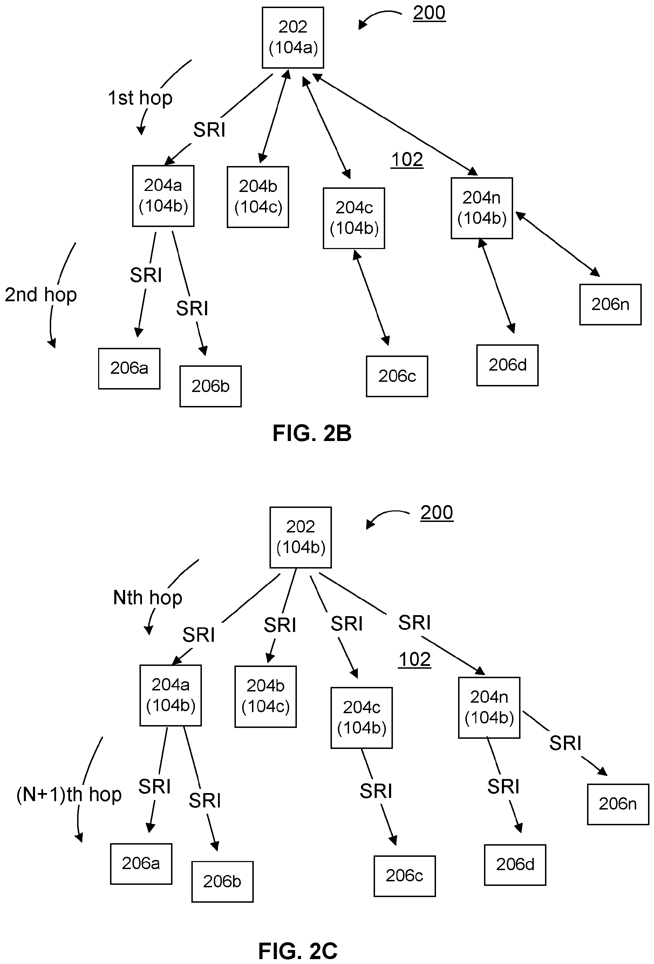

In the examples of Figures 2A-2C, the wireless mesh network 102 is implemented in a cluster tree topology. However, the dissemination solution as described in this application is not limited to that and the wireless mesh network 102 may be implemented also in other mesh topologies than the cluster tree topology. The dissemination system 200 comprises a first communication device 202 and one or more second communication devices 204a-204n being associated members of the first communication device 202. The first communication device 202 and the one or more second communication device 204a-204n belong to the plurality of communication devices of the wireless mesh network 102. The one or more second communication devices 204a-204n are associated with the first communication device 202 to operate as the member devices of the first communication device 202. After the association, the first communication device 202 is aware of, i.e. knows, identifiers (IDs) of the member devices, i.e. member device identifiers (member device IDs). The first communication device 202 is a parent device of the one or more second communication devices 204a-204n. The first communication device 202 may be a sink device 104a or a router device 104b. The one or more second communication devices 204a-204n may be router devices 104b and/or non-router devices 104c. Each second communication device 204a, 204c-204n being a router device 104b may further comprise at least one member device 206a-206n. The at least one member device 206a-206n of each second communication device 204a-204n belong to the plurality of communication devices of the wireless mesh network 102. The system 200 may further comprise a plurality of other wireless communication devices belonging to the plurality of communication devices of the wireless mesh network 102. In the examples of Figures 2A and 2B, the first communication device 202 is a sink device 104a. The one or more second communication devices 204a-204n of the examples of Figures 2A and 2B comprise one non-router device 204b and three router devices 204a, 204c-204n. In the examples of Figures 2A and 2B, each second communication device 204a, 204c-204n being a router device 104b comprises at least one member device 206a-206n. In the example of Figure 2C, the first communication device 202 is a router device 104b. The one or more second communication devices 204a-204n of the example of Figure 2C comprise one non-router device 204b and three router devices 204a, 204c-204n. In the example of Figure 2C, each second communication device 204a, 204c-204n being a router device 104b comprises at least one member device 206a-206n.

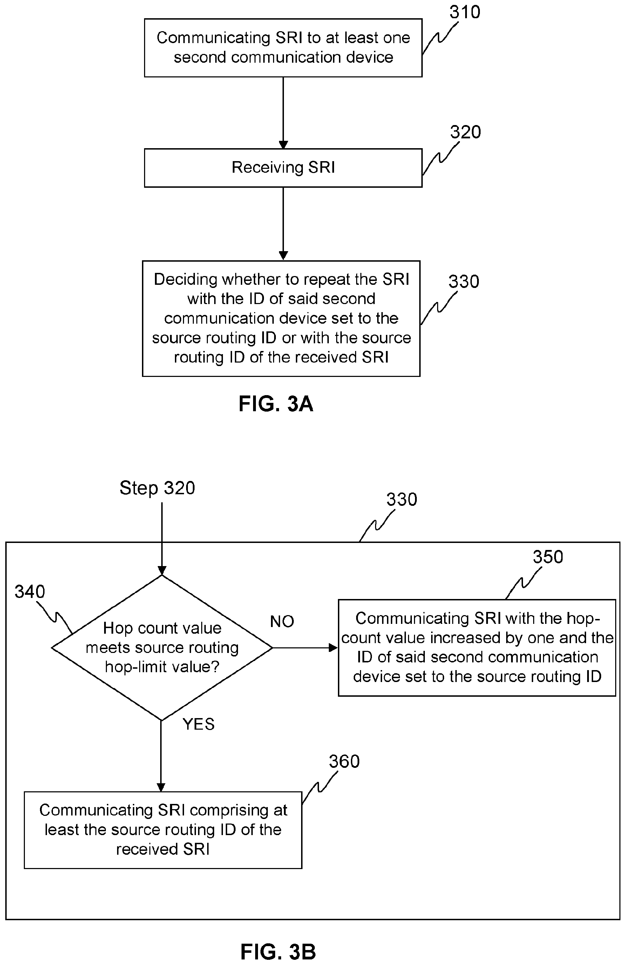

Figure 3A illustrates schematically an example of a dissemination method for disseminating source routing information in the wireless communication network 102 by the above discussed dissemination system 200. Figure 3A illustrates the dissemination method as a flowchart.

At a step 310, the first communication device 202 communicates source routing information (SRI) indicating at least one functionality of the hop-limited downlink source routing to at least one second communication device 204a-204n of the one or more second communication devices 204a-204n of the dissemination system 200 for disseminating the at least one functionality of the hop-limited downlink source routing. For example, the source route information may be a source routing information element (SR IE). The source routing information comprises source routing control information and a source routing identifier (source routing ID) indicating latest hop router device 104b participating in the hop-limited downlink source routing. The source routing control information comprises at least a source routing hop-limit value. The source routing control information may further comprise a hop-count value. The source routing hop-limit value represents the number of hops the hop-limited downlink source routing covers, i.e. the number of router devices 104b participating in the hop-limited downlink source routing in each branch of the network 102. Each member device of the sink device 104a is a first hop communication device of one branch of the network 102. In other words, the network 102 is divided into as many branches as the sink device 104a has member devices. According to a non-limiting example, the source routing hop-limit value may be defined as a 4-bit integer. The hop-count value is a parameter for counting the number of hops the source route information has travelled from the sink device 104b towards the edges of the network 102. The hop-count value may for example be defined as a 4-bit integer, wherein the hop-count value may start from 1 and be increased by 1 at every hop. In general, the source routing ID is an identifier of a router device 104b that does downlink source routing, i.e. participates in the hop-limited downlink source routing, to the communication devices beyond (i.e. below) said router device 104b in its branch of the network 102, e.g. its branch in the cluster tree topology. The source routing ID of each router device 104b participating in the hop-limited downlink source routing may be unique, or at least locally unique in the network 102. According to a non-limiting example, the source routing ID may be a Long RD ID of the DECT-2020 NR. Alternatively, the source routing ID may be any other identifier assigned for the router device 104b, e.g. in a registration process. The source routing ID comprised in the source routing information communicated by the first communication device 202 is an identifier of the latest router device 104b participating in the hop-limited downlink source routing in the same branch of the network 102 with the first communication device 202. The source routing information may further comprise a sink device identifier (sink device ID) and/or validity time data. The sink device ID indicates the ID of the sink device 104a of the network 102, i.e. the sink device from which the SRI is originally communicated. The sink device ID of may be unique, or at least locally unique in the network 102. According to a non-limiting example, the sink device ID may be a Long RD ID of the DECT-2020 NR. The validity time data indicates a time period, after which a communication device needs to register to the sink device 104a by communicating a registration message to the sink device 104a. The time period may for example be expressed in minutes or hours. The validity time may be counted for example from a transmission of a previous registration message to the sink device 104a. Alternatively, the validity time may be counted from a transmission of any other message that the sink device 104a may use for detecting the location of the communication device in the network 102. The registration of the communication devices is discussed more later in this application. The source routing ID, the source routing control information, the sink device ID, and/or the validity time data comprised in the source routing information may represent the at least one functionality of the hop-limited downlink source routing. With the expression "identifier (ID) a communication device" is meant throughout this application an identifier identifying said communication device. For example, the identifier may comprise an address (e.g. a short address or a long address) of said communication device, a value that is unique to said communication device, or any other identifier identifying said communication device.

The source routing hop-limit value may be defined by the sink device 104a or a managing entity (i.e. a backend entity) of the one or more external networks 106. The managing entity may be any computing entity, e.g. a cloud server. The source routing hop-limit value defines how deep in each branch of the network 102 the hop-limited downlink source routing is done. Alternatively or in addition, the sink device 104a or the managing entity may define the depth of the hop-limited downlink source routing in each branch of the network 102 based on a physical location, a traffic load (i.e. the number of received and transmitted data packets), and/or at least one previously received registration message. The physical location may be determined for example as geographical or relative coordinates, a range of coordinates, an identifier of a known area or a known location, or an estimated distance to a known location.

When the first communication device 202 is a sink device 104a, the first communication device 202 may communicate the source routing information by broadcasting a beacon message comprising the source routing information to all second communication devices 204a-204n of the one or more second communication devices 204a-204n. In other words, when the first communication device 202 is a sink device 104a, it broadcasts the source routing information to all of its member devices, i.e. all second communication devices 204a-204n being associated members of the sink device 104a. This is illustrated in the example of Figure 2A, where the first communication device 202a being a sink device 104a broadcasts the source routing information to all member devices of the sink device 104a, i.e. to all second communication devices 204a-204n. Communicating by broadcasting the source information from the sink device 104a to all member devices of the sink device 104a the source routing information may be disseminated to all branches of the network 102 at once.

When the first communication device 202 is a sink device 104a, the first communication device 202 may alternatively communicate the source routing information by unicasting a control message comprising the source routing information to at least one second communication device 204a of the one or more second communication devices 204a-204n. In other words, when the first communication device 202 is a sink device 104a, it unicasts the source routing information to at least one of its member devices, i.e. at least one second communication device 204a-204n being associated member of the sink device 104a. This is illustrated in the example of Figure 2B, where the first communication device 202a being a sink device 104a broadcasts the source routing information to one member device of the sink device 104a, i.e. to one second communication device 204a. Communicating by unicasting the source information from the sink device 104a only to a limited number of member devices of the sink device 104a, wherein the limited number is at least one, the dissemination of the source routing information may be branch-limited. According to an example, the sink device 104a may first communicate the source routing information to at least one member device of the sink device 104a and later the sink device 104a may communicate the source routing information to at least one other member device (other than the at least one member device to which the source routing information was first communicated). This branch-limited dissemination of the source routing information may then be continued until the source routing information is communicated to all member devices of the sink device 104a. The branch-limited dissemination of the source routing information enables that sink device 104a is capable of controlling receiving of registration messages. For example, the total number of the registration messages that the sink device 104a receives may be controlled. According to another example, the number of the registration messages that the sink device 104a receives substantially at the same time may be controlled. The registration messages are discussed more later in this application.

Alternatively or in addition, when the first communication device 202 is a router device 104b, the first communication device 202 may communicate the source routing information to all second communication devices 204a-204n by broadcasting a beacon message comprising the source routing information. In other words, when the first communication device 202 is a router device 104b, it broadcasts the source routing information to all of its member devices, i.e. all second communication devices 204a-204n being associated members of the router device 104b. This is illustrated in the example of Figure 2C, where the first communication device 202a being a router device 104b broadcasts the source routing information to all member devices of the router device 104b, i.e. to all second communication devices 204a-204n. Alternatively, when the first communication device 202 is a router device 104b, the first communication device 202 may communicate the source routing information to all second communication devices 204a-204n by unicasting a control message comprising the source routing information.

When the first communication device 202 is a sink device 104a, the first communication device 202 may communicate the source routing information at least once. For example, if the network 102 is a closed network, communicating the source routing information only once may be sufficient, but preferably the source routing information may be communicated by the first communication device 202 more than just once. Alternatively, when the first communication device is a sink device 104a, the first communication device 202 may communicate the source routing information periodically, e.g. at regular intervals and/or at irregular intervals. According to a non-limiting example, the source routing information may be included in each beacon message broadcasted by the sink device 104a. When the first communication device 202 is a router device 104b, the first communication device 202 communicates the source routing information in response to receiving the source routing information from a parent device of the first communication device 202.

At a step 320, the at least one second communication device 204a-204n receives the source routing information from the first communication device 202. In the examples of Figures 2A and 2C all second communication devices 204a-204n receives the source routing information from the first communication device 202. In the example of Figure 2B, i.e. in the branch-limited dissemination, only the second communication device 204a receives the source routing information from the first communication device 202.

At a step 330, in response to receiving the source routing information from the first communication device 202 at the step 320, each second communication device 204a-204n being a router device 104b decides based on the source routing control information comprised in the source routing information whether to repeat the received source routing information to its member devices 206a-206n with the identifier of said second communication device 204a-204n set to the source routing identifier or with the source routing identifier of the received source routing information. If said second communication device 204a-204n determines based on the source routing control information that the first communication device 202 is not the last router device 104b in this branch of the network 102, which participates in the hop-limited downlink source routing, said second communication device 204a-204n decides to repeat the received source routing information to its member devices 206a-206n with the identifier of said second communication device 204a-204n set to the source routing identifier. Alternatively, if said second communication device 204a-204n determines based on the source routing control information that the first communication device 202 is the last router device 104b in this branch of the network 102, which participates in the hop-limited downlink source routing, said second communication device 204a-204n decides to repeat the received source routing information to its member devices 206a-206n with the source routing identifier of the received source routing information.

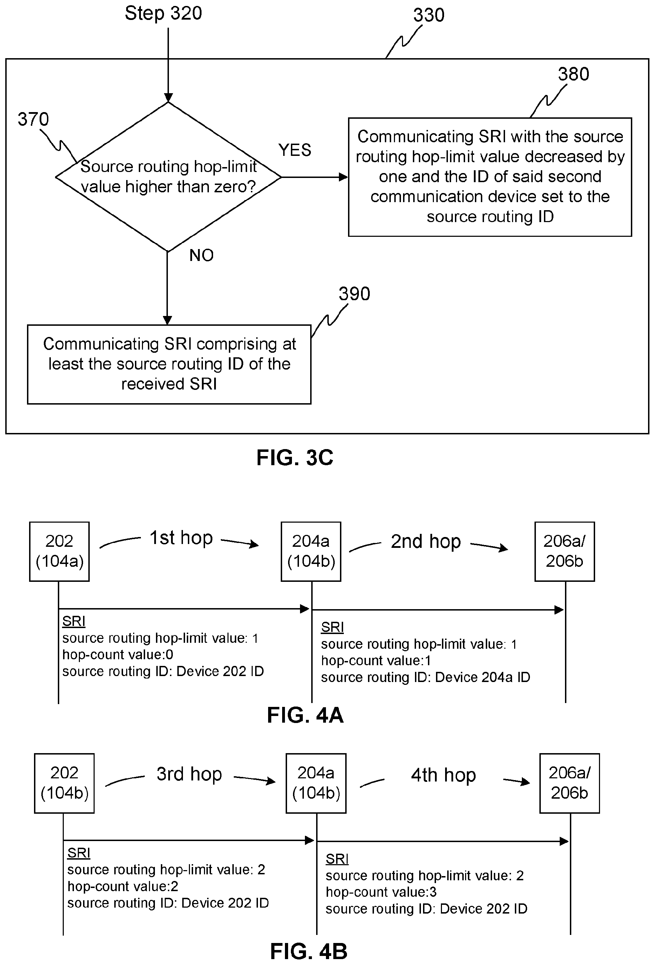

The decision at the step 330 based on the source routing control information comprised in the source routing information depends on the content of the control information. Figures 3B and 3C illustrate schematically examples of the decision-making at the step 330. In the examples of Figures 3B and 3C, the decision is made directly based on the source routing control information comprised in the received source routing information. However, the decision may also be made based on source routing control information set by the at least one second communication device 204a-204n being router device 104b based on the source routing control information comprised in the received source routing information. In this case conditions for the decision making and/or the values for the source routing control information may vary from the condition and/or values used in the examples of Figures 3B and 3C. Figures 3B and 3C illustrate only non-limiting examples for making the decision at the step 330. However, the same decision result may be achieved with one or more other decision-making methods. In other words, the decision making at the step 330 according to this application is not limited to the example methods of Figures 3B and 3C. According to a non-limiting example of the one or more other decision-making methods, the decision may be based on physical coordinates of the second communication device 202.

The example of Figure 3B illustrates an example of an increasing hop-count decision-making method. In the example of Figure 3B, the source routing control information comprises the source routing hop-limit value and the hop-count. When the source routing control information of the source routing information comprises the hop-count, each communication device receiving the source routing information may define how many hops away from the sink device 104a said communication device is.

At a step 340, in response to receiving the source routing information from the first communication device 202 at the step 320, each second communication device 204a-204n being a router device 104b compares the hop-count value of the received source routing information to the source routing hop-limit value of the received source routing information. In other words, each second communication device 204a-204n being a router device 104b that receives the source routing information from the first communication device 202 compares the hop-count value of the received source routing information to the source routing hop-limit value of the received source routing information. In the examples of Figures 2A and 2C the second communication devices 204a, 204c, and 204n being router devices 104b each performs the comparison in response to receiving the source routing information from the first communication device 202. In the example of Figure 2B, i.e. in the branch-limited dissemination, only the second communication device 204a receives the source routing information from the first communication device 202. As the second communication device 204a is a router device 104b, it performs the comparison in response to receiving the source routing information from the first communication device 202.

At a step 350, the at least one second communication device 204a-204n communicates the received source routing information to its member devices 206a-206n with the hop-count value increased by one and the ID of said second communication device 204a-204n set to the source routing ID, if the hop-count value does not meet the source routing hop-limit value. The verb "meet" in context of a predefined limit, e.g. the source routing hop-limit value, is used in this patent application to mean that a predefined condition is fulfilled. For example, the predefined condition may be that the predefined limit is reached and/or exceeded. The source routing information communicated by the at least one second communication device 204a-204n at the step 350 further comprises the source routing hop-limit value. The source routing information communicated by the at least one second communication device 204a-204n may further comprise the sink device ID and/or the validity time data, if the sink device ID and/or the validity time are comprised in the source routing information received from the first communication device.

Figure 4A illustrates schematically an example of disseminating the source routing information according to the example decision-making method of Figure 3B. In the example of Figure 4A, the first communication device 202 is a sink device 104a and the second communication device 204a is a router device 104b, e.g. as in the examples of Figures 2A and 2B. The first communication device 202 communicates the source routing information, e.g. in a beacon message or in a control message as discussed above, at least to the second communication device 204a. In the example of Figure 4A, the source routing information comprises the source routing ID and the source routing control information comprising the source routing hop-limit value and the hop-count value. The source routing hop-limit value of the source routing information is set to 1. The hop-count value is set to 0 in the source routing information communicated by the first communication device 202. The ID of the sink device 104a, i.e. the first communication device, is set as the source routing ID in the source routing information communicated by the first communication device 202. Alternatively, the source routing ID may be left empty in the source routing information communicated by the first communication device 202 being sink device 104a. The second communication device 204a receives the source routing information from the first communication device 202 and performs the comparison described above at the step 340. In the example of Figure 4A the hop-count value of the received source routing information is 0 and the source routing hop-limit is 1, which means that the result of the comparison at the step 340 is that the hop-count value does not meet the source routing hop-limit value. Thus, the second communication device 204a increases the hop-count value by one, i.e. the hop-count value is set to 1, and the ID of the second communication device 204a is set to the source routing ID. The second communication device 204a then communicates the received source routing information to its member devices 206a, 206b with the hop-count value being 1 and the ID of the second communication device 204a set to the source routing ID. The source routing information communicated by the second communication device 204a further comprises the source routing hop-limit value.

Alternatively, if the hop-count value meets the source routing hop-limit value, the at least one second communication device 204a-204n communicates at a step 360 the received source routing information comprising at least the source routing ID of the received source routing information to its member devices 206a-206n. This means that the first communication device 202 is the last router device 104b in this branch of the network 102, which participates in the hop-limited downlink source routing. The source routing information communicated by the at least one second communication device 204a-204n at the step 360 may further comprise the source routing hop-limit value and the hop-count value increased by one. Alternatively or in addition, the source routing information communicated by the at least one second communication device 204a-204n at the step 360 may further comprise the sink device ID and/or the validity time data, if the sink device ID and/or the validity time are comprised in the source routing information received from the first communication device. In response to receiving the source routing information comprising also the source routing hop-limit value and the hop-count value, each member device 206a-206b being a router device 104b performs the comparison as described above at the step 340 and communicates the source routing information to its member devices according to the step 360. Alternatively, in response to receiving the source routing information without the source routing hop-limit value and the hop-count value, each member device 206a-206n being a router device 104b communicates the source routing information comprising the source routing ID of the received source routing information to its member devices. Similarly, if a second communication device 204a-204n (or any other communication device) receives the source routing information without the source routing hop-limit value and the hop-count value, the second communication device 204a-204n (or the any other communication device respectively) communicates the source routing information comprising the source routing ID of the received source routing information to its member devices 206a-206n.

Figure 4B illustrates schematically another example of disseminating the source routing information according to the example decision-making method of Figure 3B. In the example of Figure 4B the first communication device 202 is a router device 104b and the second communication device 204a is also router device 104b, e.g. as in the example of Figure 2C. The first communication device 202 communicates the source routing information, e.g. in a beacon message as discussed above, at least to the second communication device 204a. In the example of Figure 4B, the source routing information comprises the source routing ID and the source routing control information comprising the source routing hop-limit value and the hop-count value. The source routing hop-limit value of the source routing information is set to 2. The hop-count value is set to 2 in the source routing information communicated by the first communication device 202. This means that the first communication device 202 has received the source routing information from its parent device, i.e. from a router device whose associated member the first communication device 202 is. The ID of the first communication device 202 is set as the source routing ID in the source routing information communicated by the first communication device 202 as the hop-count value comprised in the source information received by the first communication device 202 has not met the source routing hop-limit value comprised in the source information received by the first communication device 202. The second communication device 204a receives the source routing information from the first communication device 202 and performs the comparison described above at the step 340. In the example of Figure 4B the hop-count value of the received source routing information is 2 and the source routing hop-limit is 2, which means that the result of the comparison at the step 340 is that the hop-count value meets the source routing hop-limit value. Which in turn means that the first communication device 202 is the last device in this branch which participates in the hop-limited downlink source routing. Thus, the second communication device 204a communicates the received source routing information comprising at least the source routing ID of the received source routing information, i.e. the ID of the first communication device 202, to its member devices 206a, 206b. The second communication device 204a further increases the hop-count value by one, i.e. the hop-count value is set to 3. The source routing information communicated by the second communication device 204a further comprises the source routing hop-limit value and the hop-count value increased by one.

The example of Figure 3C illustrates an example of a decreasing source routing hop-limit decision-making method. In the example of Figure 3C, the source routing control information comprises the source routing hop-limit value.

At a step 370, in response to receiving the source routing information from the first communication device 202 at the step 320, each second communication device 204a-204n being a router device 104b evaluates the source routing hop-limit value comprised in the source routing control information of the received source routing information. The evaluation of the source routing hop-limit value may comprise defining the value of the source routing hop-limit value, i.e. whether the source routing hop-limit value is higher than zero or not.

At a step 380, the at least one second communication device 204a-204n communicates the received source routing information to its member devices 206a-206n with the source routing hop-limit value decreased by one and the identifier of said second communication device 204a-204n set to the source routing identifier, if the source routing hop-limit value comprised in the received source routing information is higher than zero. The source routing information communicated by the at least one second communication device 204a-204n may further comprise the sink device ID and/or the validity time data, if the sink device ID and/or the validity time are comprised in the source routing information received from the first communication device.

Otherwise, i.e. if the source routing hop-limit value comprised in the received source routing information is zero or less, the at least one second communication device 204a-204n communicates at a step 390 the received source routing information comprising at least the source routing identifier of the received source routing information to its member devices 206a-206n. This means that the first communication device 202 is the last router device 104b in this branch of the network 102, which participates in the hop-limited downlink source routing. The source routing information communicated by the at least one second communication device 204a-204n at the step 390 may further comprise the source routing hop-limit value of the received source routing information. Alternatively, the source routing information communicated by the at least one second communication device 204a-204n at the step 390 may further comprise the source routing hop-limit value decreased by one. However, preferably the source routing hop-limit value of the received source routing information being zero is not decreased anymore to avoid negative source routing hop-limit values. Alternatively or in addition, the source routing information communicated by the at least one second communication device 204a-204n at the step 390 may further comprise the sink device ID and/or the validity time data, if the sink device ID and/or the validity time are comprised in the source routing information received from the first communication device. In response to receiving the source routing information comprising also the source routing hop-limit value, each member device 206a-206b being a router device 104b evaluates the source routing hop-limit value comprised in the source routing control information of the received source routing information as described above at the step 370 and communicates the source routing information to its member devices according to the step 390. Alternatively, in response to receiving the source routing information without the source routing hop-limit value, each member device 206a-206n being a router device 104b communicates the source routing information comprising the source routing ID of the received source routing information to its member devices. Similarly, if a second communication device 204a-204n (or any other communication device) receives the source routing information without the source routing hop-limit value, the second communication device 204a-204n (or the any other communication device respectively) communicates the source routing information comprising the source routing ID of the received source routing information to its member devices 206a-206n.

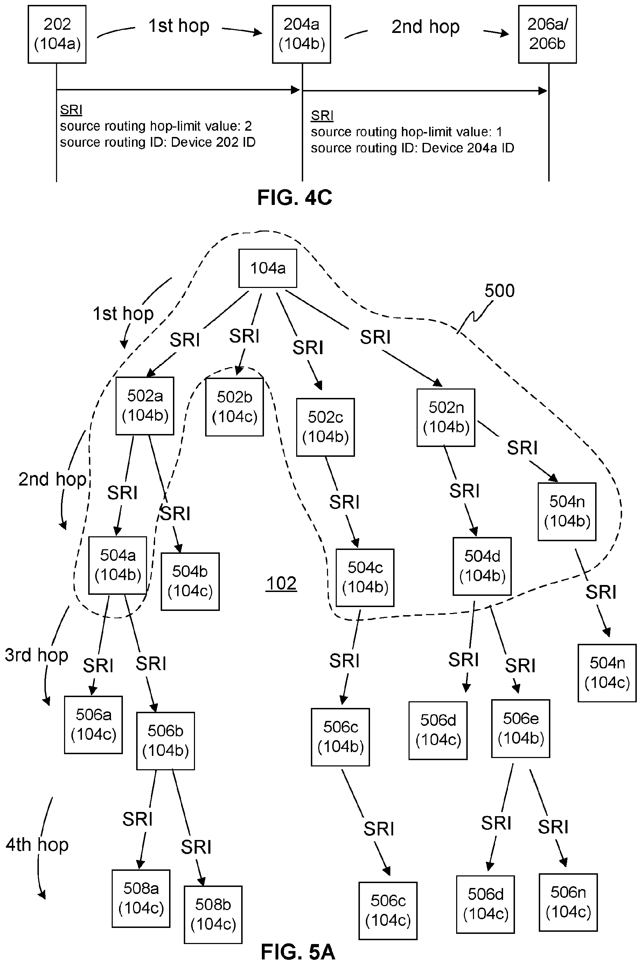

Figure 4C illustrates schematically an example of disseminating the source routing information according to the example decision-making method of Figure 3C. In the example of Figure 4C, the first communication device 202 is a sink device 104a and the second communication device 204a is a router device 104b, e.g. as in the examples of Figures 2A and 2B. The first communication device 202 communicates the source routing information, e.g. in a beacon message or in a control message as discussed above, at least to the second communication device 204a. In the example of Figure 4C, the source routing information comprises the source routing ID and the source routing control information comprising the source routing hop-limit value. The source routing hop-limit value of the source routing information communicated by the first communication device 202 is set to 2. The ID of the sink device 104a, i.e. the first communication device, is set as the source routing ID in the source routing information communicated by the first communication device 202. Alternatively, the source routing ID may be left empty in the source routing information communicated by the first communication device 202 being sink device 104a. The second communication device 204a receives the source routing information from the first communication device 202 and evaluates the source routing hop-limit value comprised in the source routing control information of the received source routing information. In the example of Figure 4C the source routing hop-limit of the received source routing information is 2, which means that the result of the evaluation at the step 370 is that the source routing hop-limit value is higher than zero. Thus, the second communication device 204a decreases the source routing hop-limit value by one, i.e. the source routing hop-limit value is set to 1, and the ID of the second communication device 204a is set to the source routing ID. The second communication device 204a then communicates the received source routing information to its member devices 206a, 206b with the source routing hop-limit value being 1 and the ID of the second communication device 204a set to the source routing ID.

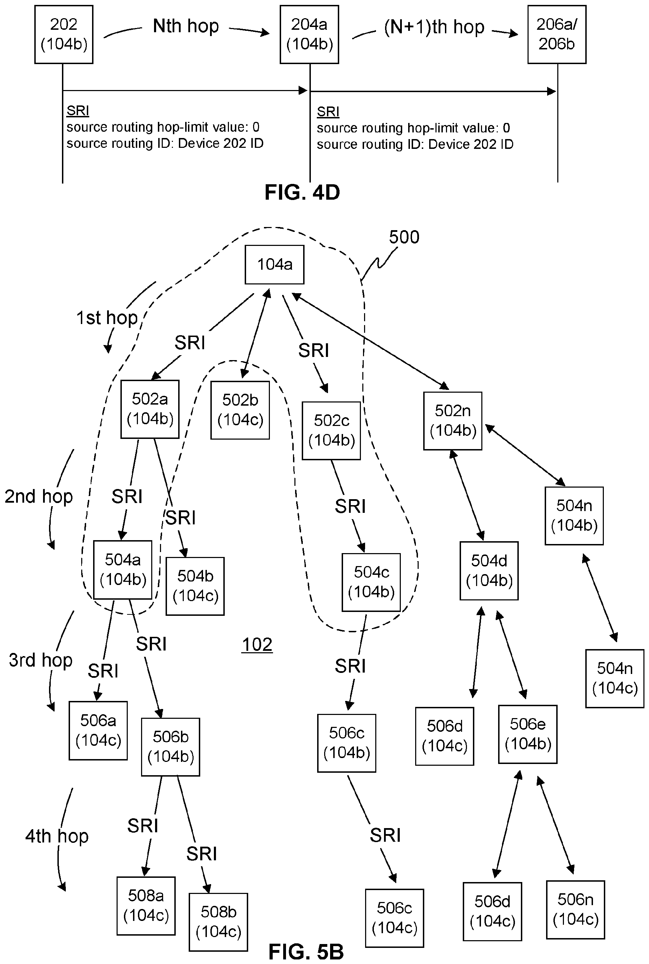

Figure 4D illustrates schematically another example of disseminating the source routing information according to the example decision-making method of Figure 3C. In the example of Figure 4D the first communication device 202 is a router device 104b and the second communication device 204a is also router device 104b, e.g. as in the example of Figure 2C. The first communication device 202 communicates the source routing information, e.g. in a beacon message as discussed above, at least to the second communication device 204a. In the example of Figure 4D, the source routing information comprises the source routing ID and the source routing control information comprising the source routing hop-limit value. The source routing hop-limit value of the source routing information communicated by the first communication device 202 is 0. The ID of the first communication device 202 is set as the source routing ID in the source routing information communicated by the first communication device 202 as the source routing hop-limit value comprised in the source information received by the first communication device 202 is higher than zero. The second communication device 204a receives the source routing information from the first communication device 202 and evaluates the source routing hop-limit value comprised in the source routing control information of the received source routing information. In the example of Figure 4D, the source routing hop-limit of the source routing information received by the second communication device 204a is 0, which means that the result of the evaluation at the step 370 is that the source routing hop-limit value is zero. Which in turn means that the first communication device 202 is the last device in this branch which participates in the hop-limited downlink source routing. Thus, the second communication device 204a communicates the received source routing information comprising at least the source routing ID of the received source routing information, i.e. the ID of the first communication device 202, to its member devices 206a, 206b. The source routing information communicated by the second communication device 204a further comprises the source routing hop-limit value of the received source routing information, i.e. the source routing hop-limit value is 0.

Above the dissemination of the source routing information by the dissemination system 200 is described over two consecutive hops. For example, when the first communication device 202 is the sink device 104a, the communication of the source routing information from the first communication device 202 to the one or more second communication devices 204a-204n is first hop communication and the communication of the source routing information from each second communication device 204a-204b to its member devices 206a-206n is second hop communication as illustrated for example in Figures 2A, 2B, 4A, and 4C. According to another example, when the first communication device 202 is a router device 104b, the communication of the source routing information from the first communication device 202 to the one or more second communication devices 204a-204n is Nth hop communication and the communication of the source routing information from each second communication device 204a-204b to its member devices 206a-206n is (N+1)th hop communication as illustrated for example in Figures 2C and 4D, wherein N is at least two. In the example of Figure 4B, the communication of the source routing information from the first communication device 202 to the second communication device 204a is 3rd hop communication and the communication of the source routing information from the second communication device 204a to its member devices 206a-206n is 4th hop communication as illustrated for example of Figure 4B. The dissemination of the source routing information over two consecutive hops may represent one dissemination phase. To disseminate the source routing information into the network 102 may comprise one or more dissemination phases. Two consecutive dissemination phases overlap each other. For example, if a first dissemination phase precedes a second dissemination phase, the second communication device 204a-204n of the first dissemination phase is the first communication device 202 of the second dissemination phase, which means that the communication of the source routing information by the second communication device 204a-204n of the first dissemination phase corresponds to the communication of the source routing information by the first communication device 202 of the second dissemination phase.

Figure 5A illustrates schematically an example of the disseminating the source routing information into the network 102. In the example of Figure 5A the dissemination of the source routing information comprises four dissemination phases: a first hop dissemination phase, a second hop dissemination phase, a third hop dissemination phase, and a fourth hop dissemination phase. Although dissemination of the source routing information in the example of Figure 5A comprises four dissemination phases, the dissemination of the source routing information into the network 102 according to this application is not limited to four dissemination phases and the dissemination of the source routing information may comprise any number of dissemination phases being at least one. In the example of Figure 5A the control information of the source routing information comprises the source routing hop-limit value and the hop-count value, and the decision making at the step 330 is performed according to the example increasing hop-count decision-making method of Figure 3B. However, the dissemination of the source routing information into the network 102 according to this application is not limited this, and any other decision-making method may be used, e.g. the example decreasing source routing hop-limit decision-making method of Figure 3C.

In the first hop dissemination phase, the sink device 104a is the first communication device 202 of the dissemination system 200 and member devices 502a-502n of the sink device 104a are the one or more second communication devices 204a-204n of the dissemination system 200. In the example of Figure 5A the member devices 502a-502n of the sink device 104a are called as first hop member devices. In the first hop dissemination phase, the sink device 104a communicates by broadcasting the source routing information with the source routing hop-limit value is set to 2, the hop-count set to 0, and the identifier of the sink device 104a set to the source routing ID to all first hop member devices 502a-502n. In response to receiving the source routing information from the sink device 104a, each first hop member device 502a, 502c-502n being a router device 104b communicates to its member devices 504a-504n the source routing information with the hop-count increased with one (i.e. the hop-count is increased to 1) and the identifier of said first hop member device 502a, 502c-502n set to the source routing ID. In the example of Figure 5A the member devices 504a-504n of the first hop member devices 502a-502n are called as second hop member devices.

In the second hop dissemination phase each first hop member device 502a, 502c-502n being a router device 104b is a first communication device of the dissemination system 200 and the second hop member devices 504a-504n of said first hop member device 502a, 502c-502n are second communication devices 204a-204n of the dissemination system 200. In the second hop dissemination phase, in response to receiving the source routing information from the respective first hop member device 502a, 502c-502n, each second hop member device 504a, 504c-504n being a router device 104b communicates to its member devices 506a-506n the source routing information with the hop-count increased with one (i.e. the hop-count is increased to 2) and the identifier of said second hop member device 504a, 504c-504n set to the source routing ID. In the example of Figure 5A the member devices 506a-506n of the second hop member devices 504a-504n are called as third hop member devices.

In the third hop dissemination phase, each second hop member device 504a, 504c-504n being a router device 104b is a first communication device 202 of the dissemination system 200 and the third hop member devices 506a-506n of said second hop member device 504a, 504c-504n are second communication devices 204a-204n of the dissemination system 200. In the third hop dissemination phase, in response to receiving the source routing information from the respective second hop member device 504a, 504c-504n, each third hop member device 506b, 506c, 506e being a router device 104b communicates the source routing information comprising at least the source routing ID of the identifier of the received source information. This means that the second hop member devices 504a, 504c-504n being router devices 104b are the last devices in their branches of the network 102 which participate in the hop-limited downlink source routing. The devices participating in the hop-limited downlink source routing are illustrated with the dashed area 500. In the example of Figure 5A the member devices 508a-508n of the third hop member devices 506a-506n are called as fourth hop member devices.

In the fourth hop dissemination phase, each third hop member device 506b, 506c, 506e being a router device 104b is a first communication device 202 of the dissemination system 200 and the fourth hop member devices 508a-508n of said third hop member device 506b, 506c, 506e are second communication devices 204a-204n of the dissemination system 200. In the fourth hop dissemination phase, the source routing information has reached all devices of the network 102, because all fourth hop member devices 508a-508n, i.e. all second communication devices, are non-router devices 104c, which do not have any member devices.

Figure 5B illustrates schematically another example of the disseminating the source routing information into the network 102. The example of Figure 5B corresponds to the example of Figure 5A described above otherwise, but the branch-limited dissemination is used in the example of Figure 5B. The dissemination is limited to the branches having the first-hop member devices 502a and 502c as the member devices of the sink device 104a.

Each communication device communicates a registration message to the sink device 104a, when said communication device associates to the network 102. The registration message may comprise at least source routing ID comprised in source routing information received by said communication device. The registration message may further comprise for example a parent device identifier (parent device ID) of said communication device. The parent device ID indicates the parent device to which said communication device is associated. Alternatively or in addition, the registration message may further comprise the sink device ID. The sink device ID comprised in the registration message ensures that the registration message is received by the correct sink device. The sink device 104a may store the content of the received registration messages, e.g. into a memory part 1034 of the sink device 104a. Alternatively or in addition, the sink device 104a may store the content of the received registration messages into or send the content of the received registration messages to be stored in a memory unit, e.g. a database, of the managing entity of the one or more external networks 106. The content of the registration messages may be delivered to the managing entity via the gateway device 105. Based on the received registration messages, the sink device 104a and/or the managing entity forms a source routing path to each source routing ID and then lists the communication devices beyond each formed source routing path. Communicating the registration messages to the sink device 104a enables that the sink device 104a and/or the managing entity may keep track on the communication devices associated to the wireless mesh network 102 and the location of each communication device in the network. The member devices of the sink device 104a do not necessarily need to communicate the registration message to the sink device 104a because an association message communicated during an association procedure comprises already the information comprised in the registration message.

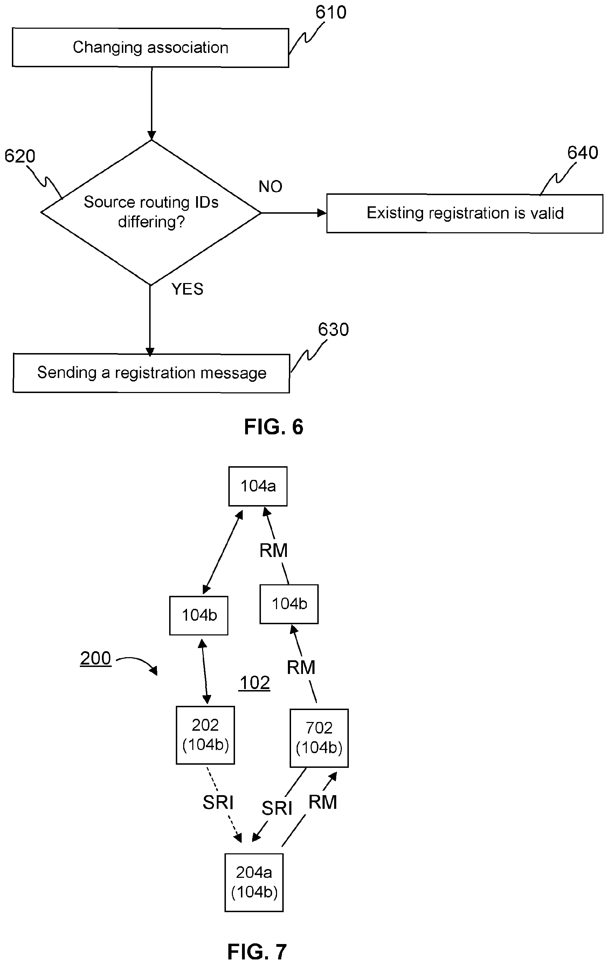

At least one second communication device 204a of the one or more second communication devices 204a-204n of the dissemination system 200 may change its association from the first communication device 202 to a third communication device 702. The third communication device 702 belongs to the plurality of communication device of the wireless mesh network 102. Each second communication device 204a-204n changing its association may communicate a registration message, if the existing registration is not valid after the changed association. Figure 6 illustrates schematically an example of a decision process of communicating the registration message in response to changing association by the above discussed dissemination system 200. Figure 6 illustrates the decision process as a flowchart. The decision process is mainly explained by using the dissemination system 200 comprising the first communication device 202, one second communication device 204a, and further the third communication device 702. The dissemination system 200 may additionally comprise at least one other second communication device 204b-204n, e.g. one, two, three, four, or more other second communicate devices. Although the decision process is described by using the dissemination system 200 comprising one second communication device 204a, each second communication device 204a-204n of the dissemination system 200 may independently perform the steps (i.e. features) of the decision process as will be explained for the one second communication device 204a. In the example of Figure 6, the first communication device 202 is a router device 104b. If a member device of the sink device 104a changes its association to another device, it does not need to send the registration message to said sink device 104a, because it is not a member of said sink device 104a anymore.

At as step 610, the second communication device 204a changes its association from the first communication device 202 to the third communication device 702. The change of the association from the first communication device 202 to the third communication device 702 means that the first communication device 202 is the parent device of the second communication device 204a before the change of the association and the third device is the parent device of the second communication device 204a after the change of the association. Before the change of the association, the second communication device 204a has received the source routing information from the first communication device 202 as described above referring to dissemination of the source routing information. After the change of the association, the second communication device 204a receives the source routing information from the third communication device 702 similarly as described above referring to dissemination of the source routing information.

At a step 620, in response to changing the association from the first communication device 202 to the third communication device 702, the second communication device 204a may compare the source routing ID comprised in the source routing information received from the third communication device 702 to the source routing ID comprised in the source routing information received from the first communication device 202. If the source routing ID comprised in the source routing information received from the first communication device 202 corresponds to the source routing ID comprised in the source routing information received from the third communication device 702, it means that the first communication device and the third communication device are in the same source routing path, which in turn means that the existing registration of the second communication device 204 is valid and there is no need to communicate a new registration message to the sink device 104a. While if the source routing ID comprised in the source routing information received from the first communication device 202 differs from the source routing ID comprised in the source routing information received from the third communication device 702, it means that the first communication device and the third communication device are in different same source routing paths.

At a step 630, the second communication device 204a, sends the registration message to the third communication device 702 for routing the registration message to the sink device 104a, if the source routing ID comprised in the source information received from the third communication device 702 differs from the source routing ID comprised in the source routing information of the first communication device 202. The registration message comprises at least the source routing ID comprised in the source routing information received from the third communication device 702. The registration message is routed to the sink device 104a by using the multi-hop communication via one or more router devices 104b at a multi-hop communication path between the third communication device 702 and the sink device 104a. Figure 7 illustrates an example of the dissemination system 200, wherein the second communication device 204a changes its association from the first communication device 202 to the third communication device 702. The second communication device 204a has received the source routing information from the first communication device before changing its association as discussed above referring to the dissemination of the source routing information. The second communication device 204a receives the source routing information from the third communication device 702 after changing its association similarly as described above referring to the dissemination of the source routing information. In the example of Figure 7, the source routing ID comprised in the source information received from the first communication device 202 differs from the source routing ID comprised in the source routing information of the third communication device 702. Therefore, the second communication device 204a, sends the registration message (RM) to the third communication device 702 for routing the registration message to the sink device 104a. In the example of Figure 7, the registration message is routed to the sink device 104a by using multi-hop communication via one router device 104b, but the multi-hop communication path between the third communication device 702 and the sink device 104a may also comprise more than one router device 104b.

Alternatively, if the source routing ID comprised in the source information received from the first communication device 202 corresponds to the source routing ID comprised in the source routing information of the third communication device 702 the second communication device 204a may define at a step 640 that the existing registration is valid. If the existing registration is defined to be valid, the second communication device 204a does not send a registration message to the sink device 104a. Because the registration messages are sent by the communication devices to the sink device 104a only when the existing registration is not valid, the number of registration messages received by the sink device 104a is reduced. It means that communication of unnecessary registration messages (i.e. registration messages communicated when the existing registration is still valid) may be avoided.

Alternatively or in addition, if the routing information comprises the validity time data, each second communication device 204a-204n may send a registration message to the first communication device 202 for routing the registration message to the sink device 104a according to the validity time data, although the second communication device 204a-204n does not change its association.

The registration message comprises at least the source routing ID comprised in the source routing information received from the first communication device 202. For example, the validity time data may indicate that the registration is valid for a certain time, e.g. for 12 hours or for 24 hours, and each second communication device 204a-204n may send the registration message to the first communication device 202 for routing the registration message to the sink device 104a after expiration of the certain time. Alternatively, the validity time data may indicate that the registration needs to be done once within a certain period of time, e.g. once a day, and each second communication device 204a-204n may send the registration message to the first communication device 202 for routing the registration message to the sink device 104a once within the certain period of time.

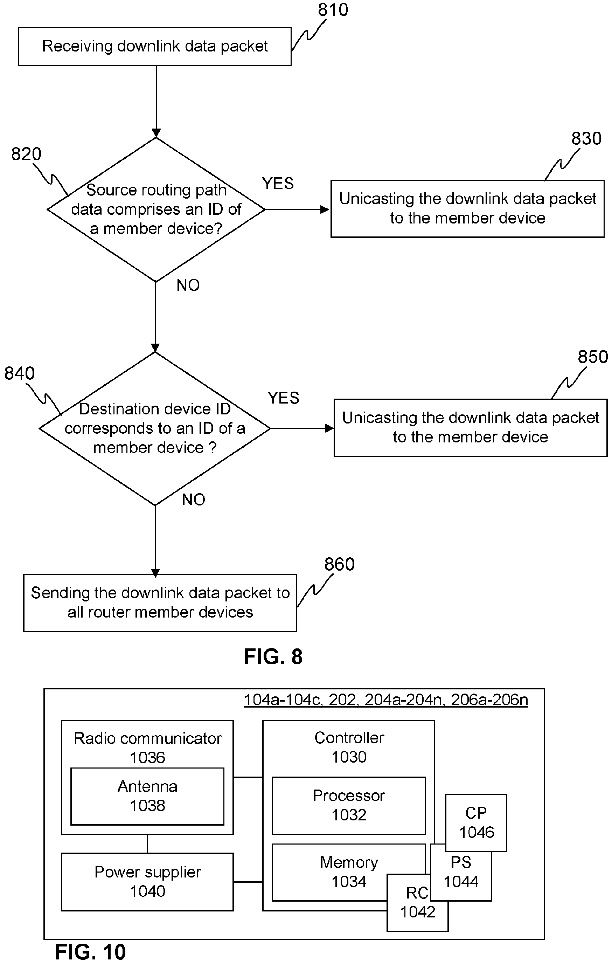

After disseminating the source routing information to the network 102, the downlink data packets may be routed from the sink device 104a to one or more destination devices 902 in the network 102 by using the hop-limited downlink source routing. Figure 8 illustrates schematically an example of a routing process of a downlink data packet by the dissemination system 200 using the hop-limited downlink source routing. Figure 8 illustrates the routing process as a flowchart.

At a step 810, the second communication device 204a receives from the first communication device 202 a downlink data packet comprising the destination device ID and the source routing path data. As discussed above, the source routing path data represents the communication path from the source device, i.e. the device transmitting the downlink data packet (e.g. the sink device 104a), to the last device participating in the hop-limited downlink source routing. The source routing path data may for example comprise the IDs of the devices participating in the hop-limited downlink source routing.

At a step 820, in response to receiving the downlink data packet from the first communication device 202, the second communication device 204a may define whether the source routing path data comprises an identifier of a member device 206a of the second communication device 204a, i.e. a member device identifier (member device ID) of the second communication device 204a. When the ID of a member device 206a-206n of the second communication device 204a is comprised the hop-path data, it means that said member device 206a participates in the hop-limited downlink source routing.

At a step 830, if the source routing path data comprises at the step 820 the ID of a member device 206a of the second communication device 202, the second communication device 204a unicasts the downlink data packet to said member device 206a. As the source routing path data indicates that only said member device 206a of the second communication device 204a participates in the hop-limited downlink source routing, there is no need to communicate the downlink data packet to the other member devices 206b-206n of the second communication device 204b.

Alternatively or in addition, at a step 840, in response to receiving the downlink data packet from the first communication device 202, the second communication device 204a may define whether the destination device ID comprised in the downlink data packet corresponds to an ID of a member device 206a of the second communication device 204a, i.e. a member device ID of the second communication device 204a. When the destination device ID corresponds to the ID of a member device 206a of the second communication device 204a, it means that said member device 206a of the second communication device 204a is the destination device 902.

At a step 850, if the destination device ID corresponds at the step 840 to the ID of the member device 206a of the second communication device 204a, the second communication device 204a unicasts the downlink data packet to said member device 206a.

Otherwise, the second communication device 204a sends, e.g. unicasts, at a step 860 the downlink data packet to all of its router member devices for routing the downlink data packet to the destination device 902. The downlink data packet may be routed to the destination device 902 by using at least one other routing solution. The at least one other routing solution may comprise one or more known routing solutions, e.g. routing table -based routing solution and/or downlink flooding -based routing solution.

Above the routing of the downlink data packet by the dissemination system 200 is described over two consecutive hops. For example, when the first communication device 202 is the sink device 104a, the downlink data packet from the first communication device 202 to the second communication device 204a is first hop communication and the communication of the downlink data packet from the second communication device 204 to its member device(s) is second hop communication. According to another example, when the first communication device 202 is a router device 104b, the communication of the downlink data packet from the first communication device 202 to the second communication device 204a is Nth hop communication and the communication of the downlink data packet from the second communication device 204a to its member device(s) is (N+1)th hop communication. The routing of the downlink data packet over two consecutive hops may represent one routing phase. To route the downlink data packet over from the source device to the destination device 902 may comprise one or more routing phases. Two consecutive routing phases overlap each other. For example, if a first routing phase precedes a second routing phase, the second communication device 204 of the first routing phase is the first communication device 202 of the second routing phase, which means that the communication of the downlink data packet by the second communication device 204a of the first routing phase corresponds to the communication of the downlink data packet by the first communication device 202 of the second routing phase.

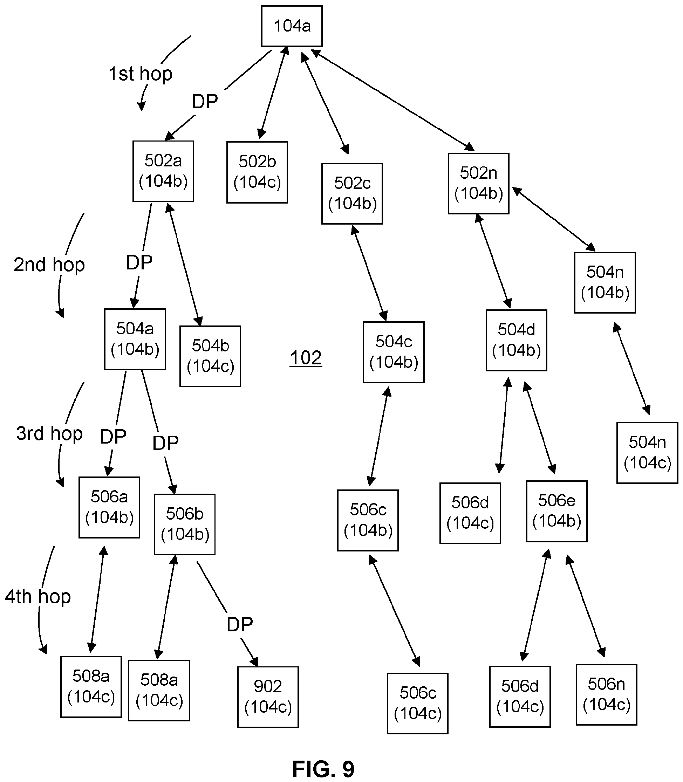

Figure 9 illustrates schematically an example of routing a downlink data packet (DP) from a sink device 104a to a destination device 902 by using the hop-limited downlink source routing. The downlink data packet comprises the destination device ID and the source routing path data. In the example of Figure 9, the communication path from the sink device 104a to the last device participating in the hop-limited downlink source routing comprises the sink device 104a, the first-hop member device 502a, and the second-hop member device 504a. Thus, the source routing path data in the example of Figure 9 comprises the ID of the sink device 104a, the ID of the first-hop member device 502a, and the ID of the second-hop member device 504a. Thus, in the example of Figure 9, the hop-limited downlink source routing is used until the downlink data packet is routed to the second-hop member device 504a and after that the downlink data packet is routed by using downlink flooding -based routing solution. In the example of Figure 9 the routing of the downlink data packet comprises four routing phases: a first hop routing phase, a second hop routing phase, a third hop routing phase, and a fourth hop routing phase. Although routing of the downlink data packet in the example of Figure 9 comprises four routing phases, the routing of the downlink data packet by using the hop- limited downlink source routing according to this application is not limited to four routing phases and the routing of the downlink data packet may comprise any other number of routing phases being at least one.

In the first hop routing phase, the sink device 104a is the first communication device 202 of the dissemination system 200 and the first hop member device 502a is the second communication device 204a of the dissemination system 200. In the first hop routing phase, the sink device 104a unicasts the downlink data packet to the first hop member device 502a. In response to receiving the downlink data packet from the sink device 104a, the first hop member device 502a unicasts the downlink data packet to the second hop member device 504a, because the source routing path data comprises the ID of the second hop member device 904a.

In the second-hop routing phase, the first hop member device 502a is the first communication device 202 of the dissemination system 200 and the second hop member device 504a is the second communication device of the dissemination system 200. In the second hop routing phase, the second hop member device 504a receives the downlink data packet from the first hop member device 502a. In response to receiving the downlink data packet from the first hop member device 502a, the second hop member device 504a sends the downlink data packet to all of its router member devices 506a, 506b for flooding the downlink data packet so that it reaches the destination device 902, because the source routing path data does not comprise an ID of a member device 506a, 506b of the second hop member device 504a and the destination device ID comprised in the downlink data packet does not correspond to an ID of a member device 506a, 506b of the second hop member device 504a.

In the third hop routing phase and the fourth-hop routing phase the downlink data packet is flooded so that the downlink data packet reaches the destination device 902.

Figure 10 illustrates schematically a communication device 104a-104c, 202, 204a-204n, 206a-206n that is able to communicate in the network 102 and to perform the relevant features (steps) of the dissemination method as above has been explained. In other words, the device that is able to operate as the first communication device 202 and to perform the features of the dissemination method relevant to the first communication device 202 as above has been explained, and/or as the second communication device 204a-204n and to perform the features of the dissemination method relevant to the second communication device 204a-204n as above has been explained, and/or as the member device 206a-206n and to perform the features of the dissemination method relevant to the member device 206a-206n as above has been explained.

The device 104a-104c, 202, 204a-204n, 206a-206n comprises the controller (control part) 1030 that controls operations of its parts 1032, 1034, 1036, 1038, 1040 so that the device 104a-104c, 202, 204a-204n, 206a-206n operates as above has been explained.

The controller 1030 comprises a processor (processor part) 1032 that performs operator-initiated and/or computer program-initiated instructions, and processes data in order to run applications. The processor 1032 may comprise at least one processor, e.g. one, two, three, four, or more processors.

The controller 1030 also comprises the memory (memory part) 1034 in order to store and to maintain data. The data may be instructions, computer programs, and data files. The memory 1034 comprises at least one memory, e.g. one, two, three, four, or more memories.

The device 104a-104c, 202, 204a-204n, 206a-206n also comprises the radio communicator (radio communication part, data transferer) 1036 and an antenna (antenna part) 1038 that the controller 1030 uses in order to send commands, requests, messages (e.g. request messages), and data (e.g. source routing information and/or downlink data packets, etc.) to at least one of devices in the dissemination system 200 and/or in the network 102 via the antenna 1038. The radio communicator 1036 also receives commands, requests, and data (e.g. source routing information and/or data packets, etc.) from at least one of devices in the dissemination system 200 and/or in the network 102 via the antenna 1038. The communication between the radio communicator 1036 of the device 104a-104c, 202, 204a-204n, 206a-206n and other device in the dissemination system 200 and/or in the network 102 is provided through the antenna 1038 wirelessly.

The device 104a-104c, 202, 204a-204n, 206a-206n may further comprise a power supplier (power supply part) 1040. The power supplier 1040 comprises components for powering the device 104a-104c, 202, 204a-204n, 206a-206n, e.g. a battery and a regulator.

The memory 1034 stores at least a radio communication (RC) application 1042 for operating (controlling) the radio communicator 1036, and a power supply (PS) application 1044 for operating the power supplier 1040.

The memory 1034 also stores a computer program (CP), (i.e. a computer software, a computer application) 1046, which uses at least one of parts 1036, 1038, 1040 in order to perform at least the operations of the device 104a-104c, 202, 204a-204n, 206a-206n explained above, when it is executed (run) in a computer, e.g. in the device 104a-104c, 202, 204a-204n, 206a-206n, by means of the controller 1030.

The computer program 1046 may be stored in a tangible, non-volatile computer-readable storage medium, e.g. a Compact Disc (CD) or Universal Serial Bus (USB) -type storage device.

The dissemination system 200 and the dissemination method as described above enables balancing between source routing -based routing solution and at least one other routing solution in the routing of downlink data packets in the network 102. At least some aspects of the dissemination system 200 and the dissemination method as described above enables that the amount of registration messages may be reduced by limiting the number of hops of the downlink source routing by using the source routing only up to a chosen number of hops and/or applying the hop-limited downlink source routing gradually to different branches of the network 102. Alternatively or in addition, at least some aspects of the dissemination system 200 and the dissemination method as described above enable controlling of the number of IDs included into the source routing path data comprised in each downlink data packet, and thus also overhead introduced to the downlink data packet may be controlled. Alternatively or in addition, at least some aspects of the dissemination system 200 and the dissemination method as described above enables controlling that the sink device 104a receives registration messages from the same depth from different branches of the network 102. Alternatively or in addition, at least some aspects of the dissemination system 200 and the dissemination method as described above enable avoiding significant memory consumption from the router devices 104b close to the sink device 104a (i.e. the router devices 104b participating in the hop-limited downlink source routing), as there is no need to maintain routing tables, while the amount of downlink flooding may also be limited.

The specific examples provided in the description given above should not be construed as limiting the applicability and/or the interpretation of the appended claims. Lists and groups of examples provided in the description given above are not exhaustive unless otherwise explicitly stated.

## Claims

1. A dissemination system (200) for a wireless mesh network (102) comprising a plurality of communication devices (104a-104c), wherein the system (200) comprises:
a first communication device (202), and
one or more second communication devices (204a-204n) being associated members of the first communication device (202),
wherein the first communication device (202) and the one or more second communication devices (204a-204n) belong to the plurality of communication devices (104a-104c) of the wireless mesh network (102);
wherein the first communication device (202) is configured to communicate source routing information to at least one second communication device (204a-204n) of the one or more second communication devices (204a-204n) for disseminating at least one functionality of a hop-limited downlink source routing, wherein the source routing information comprises source routing control information and a source routing identifier indicating latest hop router device (104b) participating in the hop-limited downlink source routing; and
wherein in response to receiving the source routing information from the first communication device (202), each second communication device (204a-204n) being a router device (104b) is configured to decide based on the source routing control information whether to repeat the received source routing information to its member devices (206a-206n) with the identifier of said second communication device (204a-204n) set to the source routing identifier or with the source routing identifier of the received source routing information.

2. The system (200) according to claim 1, wherein the first communication device (202) is a sink device (104a) configured to communicate the source routing information by:
broadcasting a beacon message comprising the source routing information to all second communication devices (204a-204n), or
unicasting a control message comprising the source routing information to at least one second communication device (204a) of the one or more second communication devices (204a-204n).

3. The system (200) according to claim 1, wherein the first communication device (202) is a router device (104b) configured to communicate the source routing information to the at least one second communication device (204a-204n) by broadcasting a beacon message comprising the source routing information or by unicasting a control message comprising the source routing information.

4. The system (200) according to any of the preceding claims, wherein the source routing control information comprises a source routing hop-limit value representing the number of hops the hop-limited downlink source routing covers and a hop-count value, and wherein in response to receiving the source routing information from the first communication device (202), each second communication device (204a-204n) being a router device (104b) is configured to:
compare the hop-count value of the received source routing information to the source routing hop-limit value of the received source routing information, and
communicate the received source routing information to its member devices (206a-206n) with the hop-count value increased by one and the identifier of said second communication device (204a-204n) set to the source routing identifier, if the hop-count value does not meet the source routing hop-limit value, or
communicate the received source routing information comprising at least the source routing identifier of the received source routing information to its member devices (206a-206n), if the hop-count value meets the source routing hop-limit value.

5. The system (200) according to any of claims 1 to 3, wherein the source routing control information of the source routing information comprises a source routing hop-limit value representing the number of hops the hop-limited downlink source routing covers, and wherein in response to receiving the source routing information from the first communication device (202), each second communication device (204a-204n) being a router device (104b) is configured to:
communicate the received source routing information to its member devices (206a-206n) with the source routing hop-limit value decreased by one and the identifier of said second communication device (204a-204n) set to the source routing identifier, if the source routing hop-limit value of the received source routing information is higher than zero, or
otherwise communicate the received source routing information comprising at least the source routing identifier of the received source routing information to its member devices (206a-206n).

6. The system (200) according to any of the preceding claims, wherein when each second communication device (204a-204n) changing its association from the first communication device (202) to a third communication device (702) belonging to the plurality of communication devices (104a-104n) of the wireless mesh network (102), said second communication device (204a-204n) is configured to:
compare the source routing identifier comprised in the source routing information received from the third communication device (702) to the source routing identifier comprised in the source routing information received from the first communication device (202); and
send a registration message to the third communication device (702) for routing the registration message to a sink device (104a), if the source routing identifier comprised in the source information received from the first communication device (202) differs from the source routing identifier comprised in the source routing information of the third communication device (702); or
define that the existing registration is valid, if the source routing identifier comprised in the source information received from the first communication device (202) corresponds to the source routing identifier comprised in the source routing information of the third communication device (702).

7. The system (200) according to any of the preceding claims, wherein the source routing information further comprises validity time data, and wherein each second communication device (204a-204n) is configured to send a registration message to the first communication device (202) for routing the registration message to a sink device (104a) according to the validity time data.

8. The system (200) according to any of the preceding claims, wherein in response to receiving a downlink data packet comprising source routing path data and an identifier of a destination device (902) of the downlink data packet from the first communication device (202), each second communication device (204a-204n) is configured to:
if the source routing path data comprises an identifier of a member device (206a-206n) of the second communication device (204a-204n), unicast the downlink data packet to said member device (206a-206n); or
if the identifier of the destination device (902) corresponds to an identifier of a member device (206a-206n) of the second communication device (204a-204n), unicast the downlink data packet to said member device (206a-206n); or
otherwise send the downlink data packet to all of its router member devices for routing the downlink data packet to the destination device (902).

9. The system (200) according to any of the preceding claims, wherein the first communication device (202) is configured to communicate the source routing information periodically.

10. A dissemination method for a wireless mesh network (102), the method comprises at least following steps:
communicating (310), by a first communication device (202), source routing information to at least one second communication device (204a-204n) being an associated member of the first communication device (202) for disseminating at least one functionality of a hop-limited downlink source routing, wherein the source routing information comprises source routing control information and a source routing identifier indicating latest hop router device (104b) participating in the hop-limited downlink source routing; and
in response to receiving (320) the source routing information from the first communication device (202), deciding (330), by each second communication device (204a-204n) based on the source routing control information whether to repeat the received source routing information to its member devices (206a-206n) with the identifier of said second communication device (204a-204n) set to the source routing identifier or with the source routing identifier of the received source routing information.

11. A communication device (202) for a wireless mesh network (102), the communication device (202) comprises:
a controller (1030), and
a radio communicator (1036) for operating as a radio node device,
wherein the communication device (202) is configured to:
communicate, by the radio communicator (1036), source routing information to at least one second communication device (204a-204n) being an associated member of the communication device (202) for disseminating at least one functionality of a hop-limited downlink source routing, wherein the source routing information comprises source routing control information and a source routing identifier indicating latest hop router device (104b) participating in the hop-limited downlink source routing.

12. A dissemination method for the communication device (202) according to claim 11, wherein the method comprises at least a step of:
communicating (310), by a radio communicator (1036) of the communication device (202), source routing information to at least one second communication device (204a-204n) being an associated member of the communication device (202) for disseminating at least one functionality of a hop-limited downlink source routing, wherein the source routing information comprises source routing control information and a source routing identifier indicating latest hop router device (104b) participating in the hop-limited downlink source routing.

13. A communication device (204a-204n) for a wireless mesh network (102), the communication device (204a-204n) comprises:
a controller (1030), and
a radio communicator (1036) for operating as a radio node device,
wherein the communication device (204a-204n) is configured to:
receive, by the radio communicator (1036), source routing information from a first communication device (202), whose associated member the communication device (204n-204n) is, wherein the source routing information comprises source routing control information and a source routing identifier indicating latest hop router device (104b) participating in the hop-limited downlink source routing; and
decide, by the controller (1030), based on the source routing control information whether to repeat, by the radio communicator (1036), the received source routing information to its member devices (206a-206n) with the identifier of said communication device (204a-204n) set to the source routing identifier or with the source routing identifier of the received source routing information.

14. A dissemination method for the communication device (204a-204n) according to claim 13, wherein the method comprises at least following steps of:
receiving (320), by a radio communicator (1036) of the communication device (204a-204n), source routing information from a first communication device (202), whose associated member the communication device (204a-204n) is, wherein the source routing information comprises source routing control information and a source routing identifier indicating latest hop router device (104b) participating in the hop-limited downlink source routing; and
deciding (330), by a controller (1030) of the communication device (204a-204n), based on the source routing control information whether to repeat, by the radio communicator (1036) of the communication device (204a-204n), the received source routing information to its member devices (206a-206n) with the identifier of said communication device (204a-204n) set to the source routing identifier or with the source routing identifier of the received source routing information.

15. A computer program (1046) comprising instructions, which, when the computer program (1046) is executed by a computer, cause the computer to carry out at least the steps of the method according to claim 12 or 14.

16. A tangible, non-volatile computer readable medium comprising the computer program (1046) according to claim 15.
